Europäisches Patentamt

European Patent Office

Office européen des brevets

(11) Publication number: **0 210 323**
**B1**

# EUROPEAN PATENT SPECIFICATION

(45) Date of publication of patent specification: **11.10.89**

(21) Application number: **86101290.4**

(22) Date of filing: **31.01.86**

(51) Int. Cl.⁴: **F 02 D 41/22, F 02 D 41/28**

(54) Failure judgment system for sensors installed in engine.

(30) Priority: **23.07.85 JP 163226/85**

(43) Date of publication of application:
**04.02.87 Bulletin 87/06**

(45) Publication of the grant of the patent:
**11.10.89 Bulletin 89/41**

(84) Designated Contracting States:
**DE FR GB**

(56) References cited:
**FR-A-2 548 274**
**GB-A-2 103 845**
**GB-A-2 130 751**
**US-A-4 252 098**
**US-A-4 274 381**

(73) Proprietor: **TOYOTA JIDOSHA KABUSHIKI KAISHA**
**1, Toyota-cho Toyota-shi**
**Aichi-ken 471 (JP)**

(72) Inventor: **Ogawa, Takashi**
**c/o TOYOTA JIDOSHA K.K. 1, Toyota-cho**
**Toyota-shi Aichi-ken (JP)**
Inventor: **Nakano, Jiro**
**c/o TOYOTA JIDOSHA K.K. 1, Toyota-cho**
**Toyota-shi Aichi-ken (JP)**

(74) Representative: **Pellmann, Hans-Bernd, Dipl.-Ing. et al**
**Patentanwaltsbüro Tiedtke-Bühling-Kinne-Grupe-Pellmann-Grams-Struif Bavariaring 4**
**D-8000 München 2 (DE)**

Courier Press, Leamington Spa, England.

## Description

### Background of the invention

### Technical field

This invention relates to failure judgement or sensor apparatus for an engine.

### Prior art

In case, the internal combustion engine for automobiles is controlled by a microcomputer, various data concerned with the engine is usually detected and controlled by a number of sensors. The failure judgement system of the sensor which detects various data for accurate control, which detects various data for accurate control, performs an important role for controlling engines and a plurality of means are adopted for the failure judgement. Fail safe function is a function to perform the stop of the engine or to perform the change-over control by adopting alternative standard value for emergency evacuation previously presumed for fear of the emergency such as bad condition for the engine and abnormal overheating of the catalyst· probably occurred when the control is continued reliably in response to the signal outputted abnormally by dint of the number of the sensor. The above-mentioned system includes a means to judge the failure of one sensor by combining signals from the other sensors. For example, the system to control the internal combustion engine for automobiles utilize the failure judgment system to detect failures of the speed sensor in accordance with the output signal of the inlet pipe pressure sensor, the engine speed sensor, and the cooling water temperature sensor, etc. However, the failure judgment is done by masking the signals from the sensor and the standard value for emergency evacuation is utilized instead of the signals, since the above-mentioned failure judgement system to detect failures of one sensor by combining the other sensors, has defect in that the judgement can not be executed even if only one of the sensors judged to be fail.

The system that the above-mentioned sensors judge failures by using the failure judgement condition combined, sometimes misjudge the sensor to be abnormal even if the above-mentioned condition is not actually met, since the combined judgement conditions include the standard value.

US—A—4 274 381 discloses a failure judgement means as presented by the circuitry 26 is provided, said failure judgement means, apart from the output of the engine coolant temperature sensor that is to be supervised, receiving the output signal of an additional engine temperature sensor and outputting a control signal for controlling the fuel injection of an internal combustion engine by means of an AND-connection only if output signals of these two temperature sensors indicating equivalent temperature values are obtained. If no equivalent output signal of the engine coolant temperature sensor is present, this output signal is suppressed and replaced by a standard value (Vo) corresponding to a usual medium coolant temperature of 80°. That means that only a (first) failure judgement means is disclosed, said failure judgement means monitoring the output signal of the engine coolant temperature sensor for generating a (first) failure signal and for replacing the output signal of the engine coolant temperature sensor by a standard value signal if this output signal is detected to be outside a (first) predetermined range. According to US—A—4 252 038 an oxygen-sensor failure check is inhibited unless other sensor output values are not in specified ranges.

### Summary of the invention

One object of this invention is to provide the failure judgement system which enables correct judgement of sensors.

Another object of this invention is to provide the failure judgement system which enables to make the system free from the dangerous condition.

Further object of this invention is to provide the failure judgement system which can prevent to misjudge the sensor to be abnormal even if the sensor is normal.

To achieve these objects a system according to the features of Claim 1 has been provided.

### Brief description of drawings

These and other objects of this invention may be best understood in reference to the following description of a preferred embodiment and the drawings in which:

Figure 1 illustrates an internal combustion engine incorporating failure judgement system of the first embodiment utilizing this invention;

Figure 2 illustrates a flowchart of the SPD sensor failure judgement 50 msec subroutine in the first embodiment;

Figure 3 is a flowchart illustrative of the Pim process subroutine in the first embodiment;

Figure 4 is a flowchart illustrative of the THW process subroutine in the first embodiment;

Figure 5 is a flowchart illustrative of the SPD sensor failure judgement 50 msec subroutine in the second embodiment;

Figure 6 is a flowchart illustrative of the SPD sensor failure judgement 50 msec subroutine in the third embodiment;

Figure 7 is a flowchart illustrative of the Pim process subroutine in the third embodiment; and

Figure 8 is a flowchart illustrative of the THW process subroutine in the third embodiment.

### Detailed description of preferred embodiment

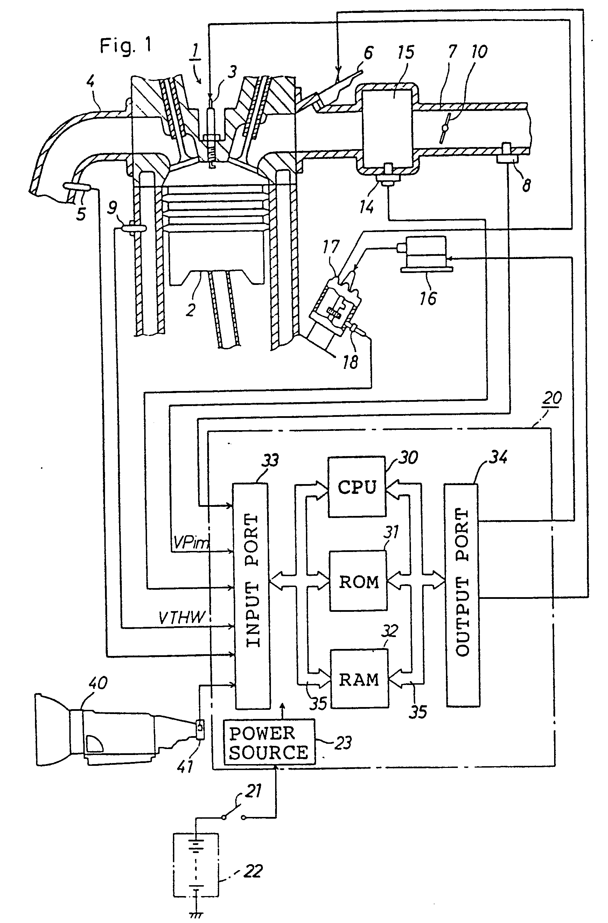

Referring to Figure 1, the internal combustion engine system is equipped with the electronic fuel injector where the failure judgement means for sensors of this invention is available. The engine system includes one cylinder of the 4-cylindered internal combustion engine and its electronic control unit. Numeral 1 denotes the body of the internal combustion engine. Numeral 2 denotes a piston. Numeral 3 shows a spark plug. Numeral 4 shows an exhaust manifold. Numeral 5 denotes an oxygen sensor which is installed in the exhaust manifold 4, and detects the residual oxygen concentration among the exhaust gas in analog quantity. Numeral 6 designates a fuel injection valve which injects fuels into the intake air in the internal combustion engine 1. Numeral 7 denotes an intake manifold. Numeral 8 shows an intake-air temperature sensor which reads the temperature of the intake air to be sent into the internal combustion engine 1. Numeral 9 denotes a water temperature sensor which detects the temperature of the internal combustion engine cooling water by means of the analog output change of the electric resistance. Numeral 10 shows a throttle valve. Numeral 14 shows a pressure sensor to detect the intake pressure of the surge tank 15 which absorbs the pulsation of the intake air. The intake pressure is detected by the electric signal in analog quantity.

Numeral 16 denotes an igniter which generates the high-power voltage required to the spark plug 3. Numeral 17 denotes a distributor interlocking with a crankshaft which is not illustrated here. Numeral 18 denotes a crank angle sensor installed in the distributor 17. The sensor provides four pulse signals per one revolution of the distributor 17 or twice of the crankshaft. Numeral 20 shows the electronic control unit as the electronic controlled part. Numeral 21 denotes a key switch. Numeral 22 denotes a battery which supplies electric power to the power source 23 within the electronic controlled unit 20 via the key switch 21.

The followings are the explanations of the electronic controlled unit 20. Numeral 30 designates the Central Processing Unit (CPU) to enter and calculate the data outputted from each sensor according to the control program and execute the required processes for operation and control of each unit. Numeral 31 designates Read Only Memory (ROM) which stores the control programs and the initial data. Numeral 32 denotes the Random Access Memory (RAM) where the data to be entered into the electronic control unit 20 and the data required to the operation control are temporarily read and written out. Numeral 33 denotes the input port to enter signals sent from each sensor. Numeral 34 designates the output port which drives the igniter 16 and the fuel injection valve 6 installed in each cylinder. Numeral 35 denotes the common bus which joins each element one another. The input port 33 includes the analog input part and the pulse input part while they are not illustrated. In the analog input part, the analog signals from the oxygen sensor 5, the intake-air temperature sensor 8 and the water temperature sensor 9, the pressure sensor 14 is received and converted into a binary number representative of the analog signal. In the pulse input part, pulse signals sent from the revolution speed sensor 41 is entered into the unit. The sensor 41 detects the crank angle and the vehicle speed SPD by utilizing the lead switch to detect the revolution speed of a magnet which is rotating with the shaft of the transmission gear 40. The above-mentioned voltage VTHW at both ends of the water temperature sensor 9 and the voltage VPim at both ends of the pressure sensor 14 are the value of voltage drop against the electric current applied from the input port 33.

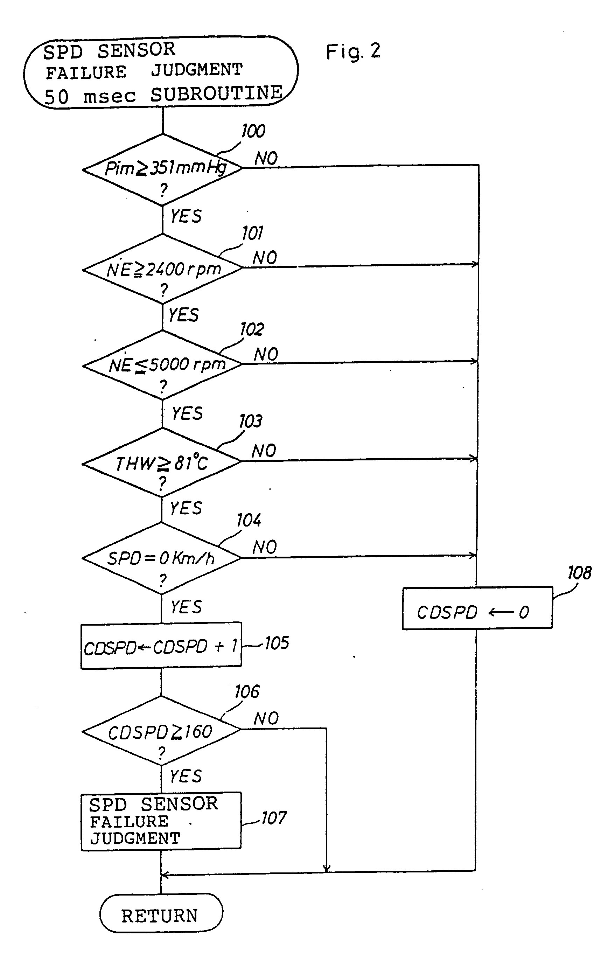

Next, the control system of the electronic control unit 20 in this embodiment is described by utilizing flowcharts shown in Figure 2 thru Figure 4. Figure 2 is a flowchart illustrative of the SPD sensor failure judgement 50 msec subroutine which detects the failure of SPD sensor 41 per 50 ms. The SPD sensor detects the vehicle speed by utilizing the characteristic part of this embodiment.

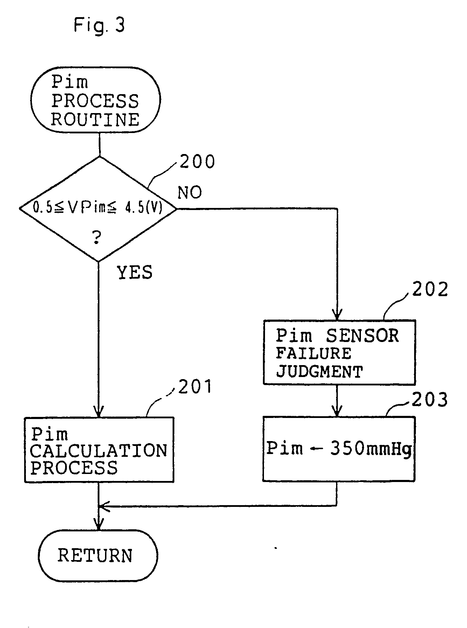

At the beginning of this flowchart, the judgement is carried out in decision point 100 to decide whether or not the intake pressure Pim given by the intake pessure Pim process routine (cf. Figure 3) is greater than or equal to 350 mmHg. If the result of this judgement is corresponding to the range, proceed to step 101. If not, proceed to step 108.

The object of decision point 102 is to judge whether or not the engine speed (NE) is less than or equal to 5,000 rpm. If the result is corresponding to the range, proceed to decision point 103. If not, proceed to step 108.

The object of decision point 102 is to judge whether or not the cooling water temperature THW decided by the internal combustion engine cooling water THW process routine (cf. Figure 3) is greater than or equal to 81°C. If the result of this judgement is corresponding to the above-mentioned range, proceed to decision point 104. If not, proceed to step 108.

The object of decision point 104 is to judge whether or not the vehicle speed SPD is 0 km/h. If the SPD is 0 km/h, proceed to step 105. If not, proceed to step 108.

The object of points 100 thru 103 is to judge whether or not the condition is prepared for the judgement of the vehicle speed in the point 104.

That is, the judgement to decide whether or not the SPD is 0 km/h can not be done until all conditions are satisfied as follows; intake pressure Pim is greater than or equal to 351 mmHg, engine speed NE is within the range of 2,400 rpm thru 5,000 rpm, cooling water temperature THW is greater than or equal to 81°C.

When all conditions of the above-mentioned point 100 thru 104 are satisfied, the failure judgement of the SPD sensor 41 is performed in step 105, point 106 and step 107. Specially in step 105 the speed counter CDSPD is incremented. In decision point 106, after the increment is completed the value of CDSPD is judged whether or not it is greater than or equal to 160. If the result of this judgement is corresponding to the above-mentioned range, proceed to step 107 wherein the vehicle speed (SPD) sensor is judged as failure. If not, once the process step exits without judging the failure of SPD sensor.

The aforementioned points 105 thru 107 are performed only if judgement conditions of points 100 thru 104 are all satisfied. If the SPD sensor failure judgement 50 msec subroutine enters into step 105 over 160 times, the SPD sensor is judged to be failure. If less than 160 times, the SPD sensor is judged to be normal.

In step 108, the value of the vehicle speed counter CDSPD is cleared to inhibit the failure judgement of SPD sensor 41 when the judgement result of any one of point 100 thru 104 is not satisfied. After the step 108 is executed, the increment processes of CDSPD in step 105 are started from the condition that the value of CDSPD is zero.

Figure 3 illustrates the Pim process subroutine to get the intake pressure Pim used in the point 100 of Figure 2.

The Pim process subroutine is initiated at decision point 200, the voltage VPim of the pressure sensor 14 is determined whether or not it is within the range from 0.5 V to 4.5 V. If the result is corresponding to the above-mentioned range, the intake pressure Pim is calculated by the value of VPim in step 201 and once the process step exits. If not corresponding to the above-mentioned range, the Pim sensor is regarded as being in failure in step 202. Then in step 203, the value of Pim is replaced with the standard value 350 mmHg and once the process exits.

Namely, if the value of VPim in decision point 200 is within the range from 0.5 V to 4.5 V, the value of Pim is calculated. If not, the Pim sensor is judged as failure, and the value of Pim is replaced by the standard value.

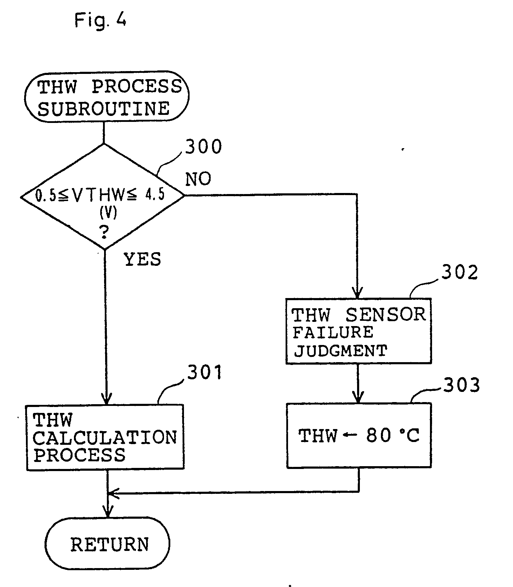

Figure 4 illustrates the THW process subroutine to get the temperature of coling water used in point 103 of Figure 2.

When the THW process subroutine is initiated, the voltage of water temperature sensor 9 (VTHW) is judged whether or not it is within the range from 0.5 V to 4.5 V in decision point 300. If the result is corresponding to the above-mentioned range, the calculation to get the temperature of cooling water (THW) by means of the value of VTHW is carried out in step 301, and once the process exits. If the value of VTHW is not corresponding to the above-mentioned range, the THW sensor is judged as failure in step 302, the standard value 80°C is substituted for THw in step 303, and once the process exits.

In this THw process routine, therefore, the THW is calculated when the value of VTHW is within the range from 0.5 V to 4.5 V in point 300. If not, the THW sensor is judged as failure and the THW is replaced by the standard value.

By introducing the aforementioned first embodiment, the misjudgement of SPD sensor, which is attributable to the fact that the intake pressure Pim sensor or the cooling water temperature THW sensor gets failure, can be prevented.

In the above-mentioned points 100 thru 103, the judgement is done by utilizing the value adding 1 LSB (least significant bit) to the standard value which is set up when the pressure (Pim) sensor 14 or the water temperature (THW) sensor 9 gets failure. Because of this, the number of words required for the program can be reduced in comparison with the case that the judgement whether or not the Pim sensor or the THW sensor is failure is executed. Also, storage elements, e.g., RAM 32 can be reduced.

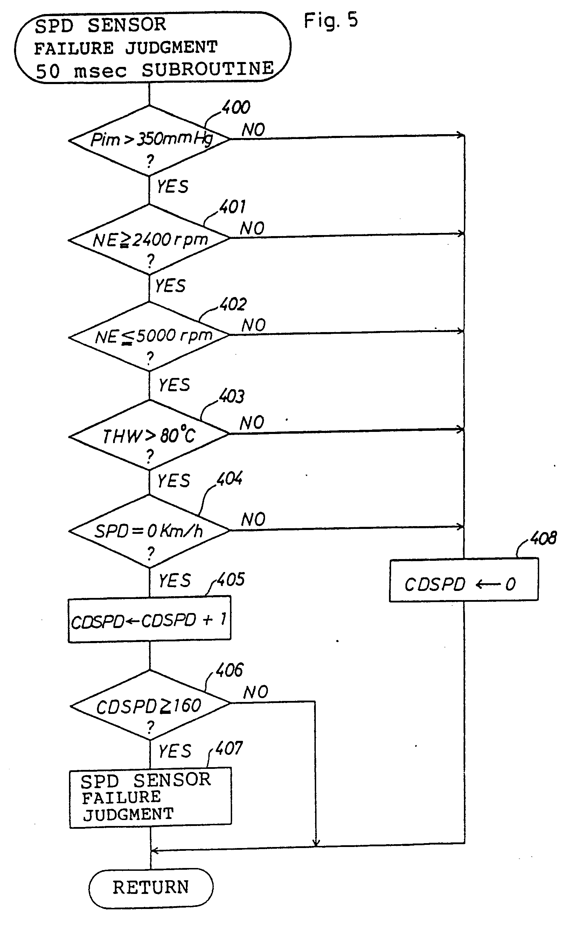

Figure 5 illustrates and described the second embodiment. While the second embodiment is similar to the first embodiment in Figure 2, there are some differences in the judgement system of the intake pressure Pim and the cooling water temperature THW in Point 100 and 103. The differences are found in only points 400 and 403 as follows:

Pim$>$=351 mmHg (point 100)—
    Pim 350 mmHg (point 400)
THW$>$=81°C (point 103)—
    THW 80°C (point 403) Therefore, the explanations of other points 401, 402, 404 and step 408 are omitted because they are same as in the first embodiment.

The function and the effect of the above-mentioned second embodiment are similar to the first embodiment. It is possible to prevent the misjudgement in the failure judgement of SPD sensor that is caused by the failure of the intake pressure Pim sensor or the cooling water temperature THW sensor. The failure of those sensors are the precondition to detect the failure of the vehicle speed (SPD) sensor 41.

In comparison with the judgement utilizing the process of [standard value+1LSB] in step 100 and 103 of the first embodiment, the flowchart of the second embodiment decides "over standard value" without standard value, so that the process of [standard value+1LSB] is omissible.

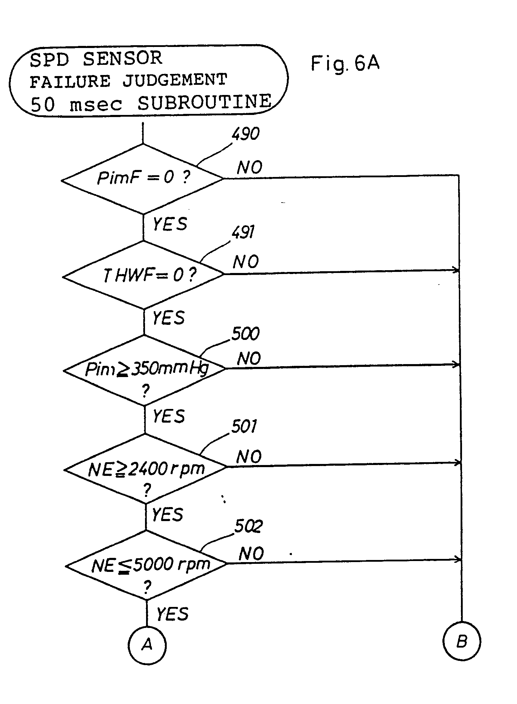

Figure 6A, Figure 7, and Figure 8 illustrate and describe the third embodiment.

While the third embodiment is fundamentally same as the first and the second embodiments, the following function is different. When the pressure (Pim) sensor 14 or the water temperature (THW) sensor 9 gets failure, the failure flag PimF or THWF is set, and the failure judgement of the SPD sensor is interrupted.

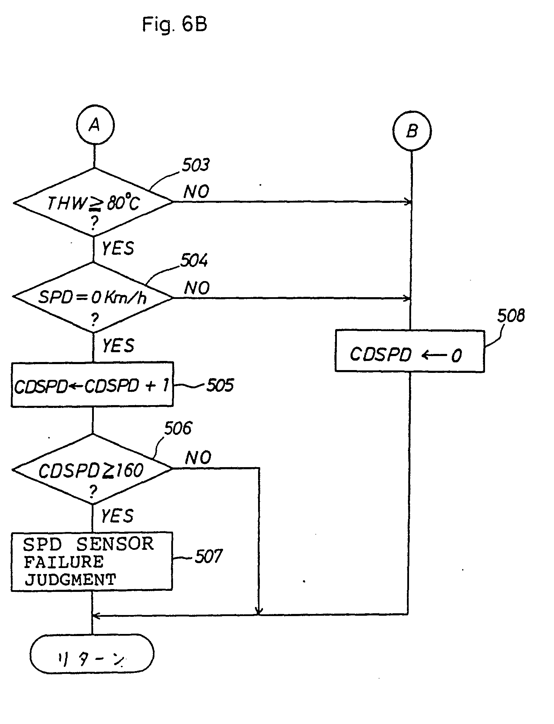

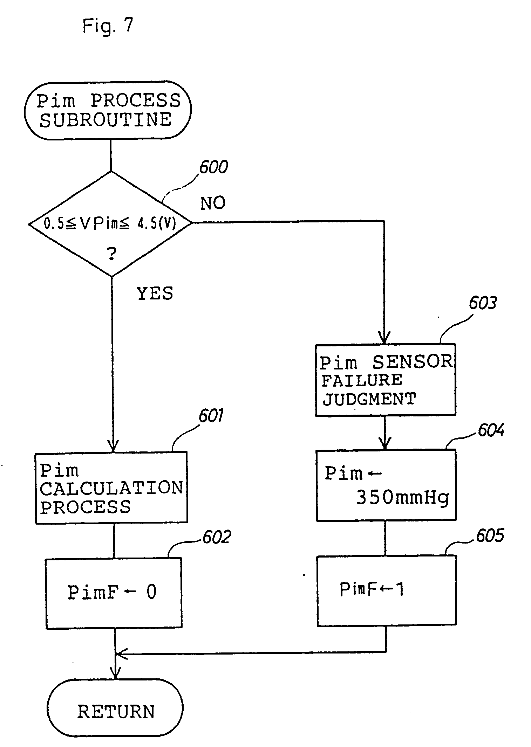

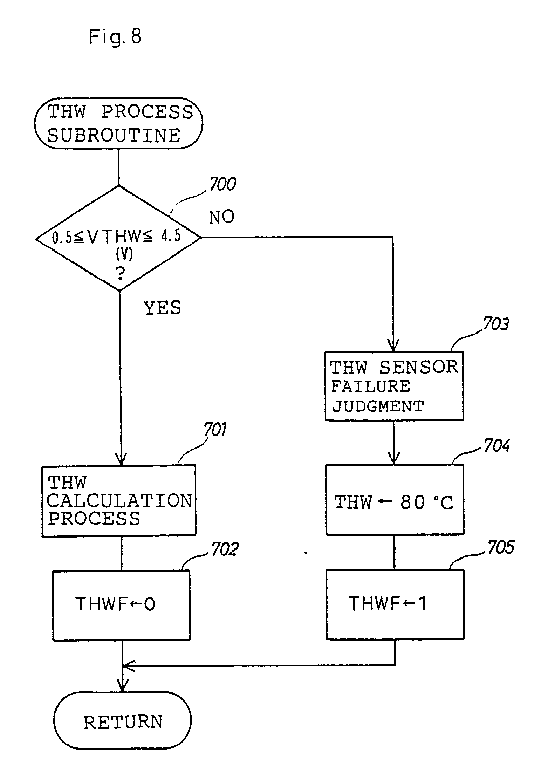

Explanations of the flowchart of the third embodiment are given hereinunder. When the SPD sensor failure judgement 50 msec subroutine in Figure 6 is started, the pressure sensor failure flag PimF or the water temperature sensor failure flag THWF is judged whether or not its value is zero in points 490 and 491 respectively by utilizing flags in the flowchart of the aftermentioned Figure 7 and Figure 8. If both of the judged values of PimF and THWF are zero, the subroutine proceed to decision point 500. If not, proceed to step 508. After the flag judgement in points 490 and 491, the following conditions, i.e., the intake pressure Pim is greater than or equal to 350 mmHg, engine speed NE is within the range from 2,400 rpm to 5,000 rpm, cooling water temperature THW is greater than or equal to 80°C, vehicle speed SPD=0 km/h, are determined in decision point 500 thru 504. If any one of the conditions is not satisfied, the subroutine proceed to step 508. If all of the above-mentioned conditions are satisfied, proceed to step 505. In step 505, decision point 506 and 507 entered from the above-mentioned steps, the failure judgement of SPD sensor is performed. Specially, it is judged whether or not all results of the judgement in point 490, 491, and 500 thru 504 are satisfied and continuously proceed 160 times to step 505. If the above-mentioned condition is satisfied, the SPD sensor is judged as failure.

If the conditions in points 490, 491, and 500 thru 504 are not satisfied, inhibit the failure judgement of SPD sensor, the speed counter CDSPD is cleared in step 508.

Detail explanations of steps 505 thru 508 are omitted because they are just same as in the first and second embodiments.

Figure 7 is a flowchart illustrative of the PimF process subroutine, where the intake pressure Pim which is used in the flowchart of Figure 6 is detected and the pressure sensor failure flag PimF is also set or reset. The followings are the explanation of Pim process subroutine.

The object of the process is to judge whether or not the voltage (VPim) of pressure sensor 14 is within the range from 0.5 V to 4.5 V in decision point 600 to judge whether the sensor 14 is failure or not. If the result is corresponding to the above-mentioned range, process to step 601 and 602, where the Pim calculation process and the reset of pressure sensor failure falge PimF are carried out.

If the result of the judgement in point 600 is not corresponding to the above-mentioned range, proceed to step 603 thru 605. After that the Pim sensor is judged as failure, the standard value 350 mmHg is substituted for Pim and the PimF is set.

Where any one of the above-mentioned points 600 step 601 thru 605, is over, once the process exits.

Figure 8 is a flowchart illustrative of the THW process subroutine, where the cooling water temperature THW to be utilized in the flowchart of Figure 6 is detected and the water temperature sensor failure flag THW is also set or reset.

The followings are the explanation of the THW process subroutine. The object of this process is to judge whether or not the voltage VTHW of water temperature sensor 9 is within the range from 0.5 V to 4.5 V in point 700 to judge whether the sensor 14 is failure or not. If the result is corresponding to the above-mentioned range, proceed to steps 701 and 702, where the Pim calculation process and the reset of water temperature sensor failure flag THWF are carried out. If the result of the judgement in point 700 is not corresponding to the above-mentioned range, the sensor 9 is judged as failure, and the subroutine proceed to steps 703 and 705, and the THW is replaced with the standard value 80°C, and the flag THWF is set.

When any one of the above-mentioned point 700 step 701 thru 705 is over, once the process exits.

The function and the effect of the above-mentioned third embodiment are similar to the first or the second embodiment. It is possible to prevent the misjudgement in the failure judgement of SPD sensor, just like the first or the second embodiment, that is caused by the failure of the intake pressure Pim sensor or the cooling water temperature THW sensor.

As the pressure sensor failure flag PimF and the water temperature sensor failure flag THWF are utilized, it is possible to provide the failure flags PimF and THWF to other controls, judgement, and indications.

The O$_2$ sensor also enables to prevent the misjudgement in failure judgement in the same manner for the SPD sensor, by utilizing the combined signals sent from other sensors.

**Claims**

1. A sensor failure judgement apparatus for an engine, comprising:
   first sensor means (9, 14), installed in said engine (1), for detecting a first operational condition and providing a first output signal indicating said first operational condition;
   second sensor means (41), installed in said engine or a vehicle in which said engine is insalled, for detecting a second operational condition and providing a second output signal indicating said second operational condition; and
   first failure judgement means, monitoring said first output signal, for generating a first failure signal and for replacing said first output signal of said first sensor means by a standard value signal if the first failure judgement means detects that said first output signal is outside of a first predetermined range;
   said apparatus being characterized by further comprising:
   second failure judgement means, monitoring said first output signal and said second output signal, for generating a second failure signal if said second output signal is outside of a range decided by said first output signal; and
   failure detection inhibiting means for inhibiting the operation of said second failure judgement means if said first failure judgement means judges that said first sensor means fails.

2. An apparatus according to Claim 1, being characterized in that said failure detection inhibiting means includes means, monitoring said first output signal, for performing said inhibition if said means detects that said first output signal is outside of a second predetermined range, the limit thereof being defined by said standard value signal.

3. An apparatus according to Claim 1, being characterized in that said failure detection inhibiting means includes means, monitoring said first failure signal, for performing said inhibition if said first failure signal is detected.

4. An apparatus according to Claim 1, being characterized in that said first sensor means includes a water temperature sensor (9) providing a signal indicative of the water temperature (THW) of said engine and an intake pressure sensor (14) providing a signal indicative of the intake pressure (Pim) of said engine.

5. An apparatus according to Claim 1, being characterized in that said second sensor means is a speed sensor (41) which provides a signal indicating the axial revolution speed of a transmission (40) of said engine.

## Patentansprüche

1. Sensorausfall-Beurteilungseinrichtung für eine Maschine, mit

einer in die Maschine (1) eingebauten ersten Sensorvorrichtung (9, 14) zum Erfassen eines ersten Betriebszustands und zum Abgeben eines ersten Ausgangssignals, das den ersten Betriebszustand anzeigt,

einer in ein Fahrzeug, in das die Maschine eingebaut ist, oder in die Maschine eingebauten zweiten Sensorvorrichtung (41) zum Erfassen eines zweiten Betriebszustands und zum Abgeben eines zweiten Ausgangssignals, das den zweiten Betriebszustand anzeigt, und

einer das erste Ausgangssignal überwachenden ersten Ausfall-Bewertungseinrichtung zum Erzeugen eines ersten Ausfallsignals und zum Ersetzen des ersten Ausgangssignals der ersten Sensorvorrichtung durch ein Normalwertsignal, falls die erste Ausfall-Bewertungseinrichtung ermittelt, daß das erste Ausgangssignal außerhalb eines ersten vorbestimmten Bereichs liegt, gekennzeichnet durch

eine das erste Ausgangssignal und das zweite Ausgangssignal überwachende zweite Ausfall-Bewertungseinrichtung zum Erzeugen eines zweiten Ausfallsignals, falls das zweite Ausgangssignal außerhalb eines durch das erste Ausgangssignal bestimmten Bereichs liegt, und

eine Ausfallerfassungs-Sperreinrichtung zum Sperren der Funktion der zweiten Ausfall-Bewertungseinrichtung, falls die erste Ausfallbewertungseinrichtung ermittelt, daß die erste Sensorvorrichtung ausfällt.

2. Einrichtung nach Anspruch 1, dadurch gekennzeichnet, daß die Ausfallerfassungs-Sperreinrichtung eine das erste Ausgangssignal überwachende Einrichtung für das Ausfühen des Sperrens in dem Fall enthält, daß die Einrichtung ermittelt, das das erste Ausgangssignal außerhalb eines zweiten vorbestimmten Bereichs liegt, dessen Grenze durch das Normalwertsignal bestimmt ist.

3. Einrichtung nach Anspruch 1, dadurch gekennzeichnet, daß die Ausfallerfassungs-Sperreinrichtung eine das erste Ausfallsignal überwachende Einrichtung für das Ausführen des Sperrens in dem Fall enthält, daß das erste Ausfallsignal erfaßt wird.

4. Einrichtung nach Anspruch 1, dadurch gekennzeichnet, daß die erste Sensorvorrichtung einen Wassertemperatursensor (9), der ein Signal abgibt, das die Wassertemperatur (THW) der Maschine anzeigt, und einen Ansaugdrucksensor (14) enthält, der ein Signal abgibt, das den Ansaugdruck (Pim) der Maschine anzeigt.

5. Einrichtung nach Anspruch 1, dadurch gekennzeichnet, daß die zweite Sensorvorrichtung ein Dehzahlsensor (41) ist, der ein Signal abgibt, das die Achsdrehzahl eines Getriebes (40) der Maschine anzeigt.

## Revendications

1. Un appareil d'estimation de défaillance de capteur pour moteur comprenant:

des premiers moyens de capteur (9, 14) montés sur ledit moteur (1) pour détecter un premier état de fonctionnement et qui fournissent un premier signal de sortie indiquant ledit premier état de fonctionnement;

des seconds moyens de capteur (41) montés sur ledit moteur ou sur un véhicule dans lequel est installé ledit moteur, pour détecter un second état de fonctionnement et qui fournissent un second signal de sortie indiquant ledit second état de fonctionnement; et

des premiers moyens d'estimation de défaillance, qui surveillent ledit premier signal de sortie, pour émettre un premier signal de défaillance et pour remplacer ledit premier signal de sortie desdits premiers moyens de capteur par un signal de valeur standard si les premiers moyens d'estimation de défaillance détectent que ledit premier signal de sortie est en dehors d'un premier domaine prédéterminé;

ledit appareil étant caractérisé en ce qu'il comporte en outre:

des seconds moyens d'estimation de défaillance, qui surveillent ledit premier signal de sortie et ledit second signal de sortie, pour émettre un second signal de défaillance si ledit second signal de sortie est en dehors d'un domaine fixé par ledit premier signal de sortie; et

des moyens d'interdiction de détection de défaillance pour interdire le fonctionnement desdits seconds moyens d'estimation de défaillance si lesdits premiers moyens d'estimation de défaillance estiment que lesdits premiers moyens de capteur sont défaillants.

2. Un appareil selon la revendication 1, caractérisé en ce que lesdits moyens d'interdiction de détection de défaillance, comportent des moyens de surveillance dudit premier signal de sortie, pour effectuer ladite interdiction, si lesdits moyens détectent que ledit premier signal de sortie est en dehors d'un second domaine prédéterminé dont la limite est définie par ledit signal standard de valeur.

3. Un appareil selon la revendication 1, caractérisé en ce que lesdits moyens d'interdiction de détection de défaillance comportent des moyens de surveillance dudit premier signal de défaillance, pour effectuer ladite interdiction si ledit premier signal de défaillance est détecté.

4. Un appareil selon la revendication 1, caractérisé en ce que lesdits premiers moyens de capteur comportent un capteur de température d'eau (9), qui fournit un signal indiquant la température (THW) de l'eau dudit moteur et un capteur (14) de pression à l'admission (14) qui fournit ou signal indiquant la pression à l'admission (Pim) dudit moteur.

5. Un appareil selon la revendication 1, caractérisé en ce que lesdits seconds moyens de capteurs sont constitués par un capteur de vitesse (41) qui fournit un signal indiquant la vitesse de rotation axiale d'une transmission (40) dudit moteur.

Fig. 1

CPU

ROM

RAM

INPUT PORT

OUTPUT PORT

POWER
SOURCE

VPim

VTHW

Fig. 2

```
        ┌─────────────────────────┐
        │ SPD SENSOR              │
        │ FAILURE   JUDGMENT      │
        │ 50 msec SUBROUTINE      │
        └─────────────────────────┘
                     │
                     │            100
              ╱──────────────╲        NO
             ╱ Pim ≥ 351mmHg  ╲──────────────────────────────────┐
             ╲       ?        ╱                                   │
              ╲──────────────╱                                    │
                     │ YES                                        │
                     │            101                             │
              ╱──────────────╲        NO                          │
             ╱ NE ≥ 2400 rpm  ╲──────────────────────────────────┤
             ╲       ?        ╱                                   │
              ╲──────────────╱                                    │
                     │ YES                                        │
                     │            102                             │
              ╱──────────────╲        NO                          │
             ╱ NE ≤ 5000 rpm  ╲──────────────────────────────────┤
             ╲       ?        ╱                                   │
              ╲──────────────╱                                    │
                     │ YES                                        │
                     │            103                             │
              ╱──────────────╲        NO                          │
             ╱  THW ≥ 81°C    ╲──────────────────────────────────┤
             ╲       ?        ╱                                   │
              ╲──────────────╱                                    │
                     │ YES                                        │
                     │            104                             │
              ╱──────────────╲        NO                          │
             ╱  SPD = 0 Km/h  ╲──────────────────────────────────┤
             ╲       ?        ╱                           108      │
              ╲──────────────╱                     ┌──────────────┐│
                     │ YES                         │ CDSPD ← 0    ││
        ┌────────────────────────┐ 105             └──────────────┘│
        │ CDSPD ← CDSPD + 1      │                        │        │
        └────────────────────────┘                        │        │
                     │            106                      │        │
              ╱──────────────╲        NO                    │        │
             ╱ CDSPD ≥ 160    ╲──────────────┐              │        │
             ╲       ?        ╱               │              │        │
              ╲──────────────╱                │              │        │
                     │ YES                    │              │        │
        ┌────────────────────────┐ 107        │              │        │
        │ SPD SENSOR             │            │              │        │
        │ FAILURE                │            │              │        │
        │ JUDGMENT               │            │              │        │
        └────────────────────────┘            │              │        │
                     │◄───────────────────────┴──────────────┴────────┘
                     │
              ┌────────────┐
              │  RETURN    │
              └────────────┘
```

2

Fig. 3

Pim
PROCESS
ROUTINE

200

$0.5 \leqq VPim \leqq 4.5(V)$ ?

NO

YES

202

Pim SENSOR
FAILURE
JUDGMENT

201

Pim
CALCULATION
PROCESS

203

Pim ← 350mmHg

RETURN

Fig. 4

THW PROCESS SUBROUTINE

300

$0.5 \leqq VTHW \leqq 4.5$ (V) ?

NO

YES

302

THW SENSOR FAILURE JUDGMENT

301

THW CALCULATION PROCESS

303

THW ← 80 °C

RETURN

Fig. 5

SPD SENSOR FAILURE JUDGMENT 50 msec SUBROUTINE

400 — Pim > 350mmHg ? — NO
YES

401 — NE ≧ 2400 rpm ? — NO
YES

402 — NE ≦ 5000 rpm ? — NO
YES

403 — THW > 80°C ? — NO
YES

404 — SPD = 0 Km/h ? — NO
YES

405 — CDSPD ← CDSPD + 1

406 — CDSPD ≧ 160 ? — NO
YES

407 — SPD SENSOR FAILURE JUDGMENT

408 — CDSPD ← 0

RETURN

Fig. 6A

SPD SENSOR
FAILURE JUDGEMENT
50 msec SUBROUTINE

490

PimF = 0 ?  — NO → B

YES

491

THWF = 0 ? — NO → B

YES

500

Pim ≥ 350mmHg ? — NO → B

YES

501

NE ≥ 2400 rpm ? — NO → B

YES

502

NE ≤ 5000 rpm ? — NO → B

YES

A          B

Fig. 6B

503 — THW ≥ 80°C ? — NO → B

YES

504 — SPD = 0 Km/h ? — NO → B

YES

CDSPD ← CDSPD + 1 — 505

506 — CDSPD ≥ 160 ? — NO

YES

SPD SENSOR FAILURE JUDGMENT — 507

508 — CDSPD ← 0

リターン

Fig. 7

```
        ┌─────────────────┐
        │  Pim PROCESS    │
        │  SUBROUTINE     │
        └─────────────────┘
                 │
                 │                      600
              ◇─────◇                   NO
          0.5≦VPim≦ 4.5(V)  ─────────────────────────┐
              ◇  ?  ◇                                 │
               YES                                    │
                 │                                    ▼
                 │                          ┌──────────────┐  603
                 │                          │ Pim SENSOR   │
                 │                          │ FAILURE      │
                 │                          │ JUDGMENT     │
                 │                          └──────────────┘
                 │                                    │
                 ▼           601                      ▼        604
        ┌──────────────┐            ┌──────────────┐
        │ Pim          │            │ Pim ←        │
        │ CALCULATION  │            │   350mmHg    │
        │ PROCESS      │            └──────────────┘
        └──────────────┘                    │
                 │         602               │        605
        ┌──────────────┐            ┌──────────────┐
        │  PimF ← 0    │            │  PimF ← 1    │
        └──────────────┘            └──────────────┘
                 │                          │
                 └──────────────◄───────────┘
                 ▼
        ┌─────────────────┐
        │    RETURN       │
        └─────────────────┘
```

Fig. 8

```
        ┌─────────────────┐
        │  THW  PROCESS   │
        │   SUBROUTINE    │
        └─────────────────┘
                 │
                 │          700
                ╱ ╲              NO
              ╱     ╲ ───────────────────────┐
            ╱ 0.5≦VTHW≦ 4.5 ╲                │
            ╲     (V)       ╱                │
              ╲    ?     ╱                   │
                ╲     ╱                      │
                 ╲ ╱                         │
               YES │                         │
                   │                         │
                   │                 ┌───────────────┐ 703
                   │                 │ THW  SENSOR   │
                   │                 │ FAILURE       │
                   │                 │ JUDGMENT      │
                   │                 └───────────────┘
                   │                         │
          ┌────────────────┐ 701             │
          │ THW            │        ┌───────────────┐ 704
          │ CALCULATION    │        │               │
          │ PROCESS        │        │  THW ← 80 °C  │
          └────────────────┘        └───────────────┘
                   │                         │
          ┌────────────────┐ 702    ┌───────────────┐ 705
          │                │        │               │
          │    THWF←0      │        │    THWF←1     │
          └────────────────┘        └───────────────┘
                   │                         │
                   │◄────────────────────────┘
                   │
            ┌──────────────┐
            │    RETURN    │
            └──────────────┘
```